## Europäisches Patentamt
## European Patent Office
## Office européen des brevets

(19)

(11) Publication number: **0 195 521**
**A1**

(12) **EUROPEAN PATENT APPLICATION**

(21) Application number: **86301160.7**

(22) Date of filing: **19.02.86**

(51) Int. Cl.⁴: **F 16 D 25/12**
**B 65 D 59/00**

(30) Priority: **07.03.85 US 709088**

(43) Date of publication of application:
**24.09.86 Bulletin 86/39**

(84) Designated Contracting States:
**DE FR GB IT**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Nix, Richard Andrew**
**45482 Hecker**
**Utica Michigan 48087(US)**

(72) Inventor: **Leigh-Montstevens, Keith Vernon**
**5622 Larkins**
**Troy Michigan 48098(US)**

(72) Inventor: **Kassin, Charles Anthony**
**8871 Twenty Two Mile Road**
**Utica Michigan 48087(US)**

(74) Representative: **Adkins, Michael et al,**
**Withers & Rogers 4 Dyer's Buildings**
**Holborn London, EC1N 2JT(GB)**

(54) **Hydraulic control apparatus and method of assembly thereof.**

(57) The hydraulic control apparatus includes an actuator (18) having an annular body (32) providing an annular piston chamber (41) therein and an annular piston (44) slidably reciprocable on the body, the actuator being pre-filled with hydraulic fluid and pre-tested prior to being installed on a structure. An annular elastomeric seal (43) is axially reciprocable within the piston chamber to move the piston the construction of the piston being such that a rear end thereof reaches into the piston chamber and abuts against the seal during functioning of the actuator. A movement restraining device (54) is provided for insertion on the body to take the place of the piston, the movement restraining device being constructed so that it is slidable on the body and so that a rear end thereof reaches into the piston chamber and abuts against the seal. The movement restraining device is force-fully held on the body, e.g. frictionally, to hold the seal against axial movement while the actuator is filled with hydraulic fluid. It is removed during installation of the actuator, e.g. in a vehicle, and replaced by the piston.

FIG.2

## HYDRAULIC CONTROL APPARATUS AND METHOD OF ASSEMBLY THEREOF

The invention relates to hydraulic control apparatus and method of assembly thereof and is particularly but not exclusively concerned with a hydraulic clutch control apparatus for a vehicle friction clutch having a slave cylinder for operating the clutch release mechanism remotely from a master cylinder.

It is now known to pre-fill with hydraulic fluid a motor vehicle hydraulic clutch control apparatus comprising a master cylinder, a reservoir of fluid and a slave cylinder for operating the throw-out bearing of a mechanical diaphragm spring clutch, as disclosed in British Patent No. 1,539,879, and in U.S. Patent No. 4,454,632. In additon co-pending U.K. application NO. 2,142,999A discloses pre-filled hydraulic control mechanisms for motor vehicle clutches, and co-pending European application NO. 0146289 discloses improvements pertaining to the slave cylinder for such hydraulic clutch control apparatus.

Pre-filled and pre-tested hydraulic apparatus for operating motor vehicle mechanical clutches presents many advantages for the motor vehicle manufacturer including receiving a fully assembled mechanism comprising all of the components pre-filled and pre-tested for operability and ready to be installed as one or more subassemblies on a motor vehicle during final assembly thereof.

According to one aspect of the invention there is provided a method of assembling a hydraulic control apparatus for mounting on a structure to actuate a mechanism, said apparatus including an actuator having a body defining a piston chamber, and piston means and seal means slidably reciprocable within said piston chamber by hydraulic fluid under pressure, the method including inserting a movement restraining device into the piston chamber with the piston means removed to inhibit axial movement of the seal in one direction and, to render the actuator operative, removing said movement restraining device and replacing it with said piston means.

Preferably, the method includes filling the actuator with said hydraulic fluid with the movement restraining device in position in the piston chamber.

The method may also include securing the body to a member, e.g. an end plate of a transmission or a bell housing, by fastening means which lie radially outboard of radial extremities of said movement restraining device  Such an arrangement is useful as the movement transmitting device will not obscure the fastening means and will permit a single tightening device, e.g. a nut runner, to be moved up axially over the body to tighten all the fasteners simultaneously. Normally, the piston and throw-out bearing thereon prevent such a nut runner being used when the piston is positioned in the piston chamber.

According to another aspect of the invention there is provided hydraulic control apparatus for mounting on a structure to actuate a mechanism, said apparatus including an actuator having a body defining a piston chamber, piston means and seal means slidable axially within said chamber by hydraulic fluid under pressure, and a movement restraining device insertable in said piston chamber in place of the piston means to inhibit axial movement of the seal in one direction, the movement restraining device being subsequently removable so that the piston means can be inserted to render the actuator operative.

Preferably, the movement restraining device is inserted in the piston chamber prior to the actuator being filled with hydraulic fluid. As mentioned above, the body may be secured to a member by fastening means which lie radially outboard of radial extremeties of said movement restraining device.

The movement restraining device is preferably arranged to be held frictionally within the piston chamber. In such a case, the restraining device may be formed so that a portion thereof flexes radially as the movement restraining device is inserted into the piston chamber.

Preferably said piston chamber, piston seal and movement restraining device are annular.

The movement restraining device may be formed as a double-walled hollow sleeve having inner and outer walls and a radial end wall for engaging said seal. The inner and outer walls may be formed so that one of them flexes radially towards the other when the movement restraining device is inserted in the piston chamber.

Handle means may be provided on said movement restraining device to enable the movement restraining device to be removed from the piston chamber.

The actuator may be a slave cylinder of a hydraulic control apparatus, e.g. clutch control apparatus of a vehicle.

According to still another aspect of the invention, there is provided an improvement in a hydraulic control apparatus for assembly on structure to actuate a remotely located mechanism, said apparatus including an actuator having an annular body providing an annular piston chamber therein an annular piston means slidably reciprocable on said body, said actuator being pre-filled with hydraulic fluid and pre-tested prior to being installed on said structure, and an annular elastomeric seal axially reciprocable within said piston chamber which liquid-tight seals the hydraulic fluid behind it, said improvement comprising constructing said actuator so that it can be separated into two subassemblies, one being a body subassembly which includes said body and the other being a piston means subassembly which includes said piston means, the construction of said body being such that its piston chamber is formed at the rear end thereof and the construction of said piston means being such that the rear end thereof reaches into said piston chamber and abuts against said seal during functioning of said actuator, said improvement further comprising providing a movement restraining device for insertion on said body to take the place of said piston

-4-

means when the two subassemblies are separated from each other, said movement restraining device being constructed so that it is slidable on said body and so that the rear end thereof reaches into said piston chamber and abuts against said seal, said movement restraining device being forcefully held on said body to hold said seal against axial movement while actuator is filled with hydraulic fluid.

According to a further aspect of the invention, there is provided improvement in hydraulic clutch control apparatus for assembly on a motor vehicle to actuate a remotely located clutch release mechanism of a friction clutch assembly of said vehicle, said hydraulic clutch control apparatus including a slave cylinder having an annular body providing an annular piston chamber therein and annular piston means slidably reciprocable on said body, said piston means including an annular body having forward and rearward-facing cavities therein for holding, respectively, throw-out bearing and a take-up spring for the clutch of said motor vehicle, said slave cylinder being pre-filled with hydraulic fluid and pre-tested prior to being installed on said motor vehicle, an annular elastomeric seal axially reciprocable within said piston chamber which liquid-tight seals the hydraulic fluid behind it, said improvement comprising constructing said slave cylinder so that it can be separated into two subassemblies, one being a body subassembly which includes said body and the other being a piston means subassembly which includes said piston means, the construction of said body being such that its piston chamber is formed at the rear end, thereof and the construction of said piston means being such that the rear end thereof reaches into said piston chamber and abuts against said seal during functioning of said slave cylinder, said improvement further comprising providing a movement-restraining device for insertion on said body to take the place of said piston means when the two subassemblies are separated from each other, said movement-restraining device being constructed so that the rear end thereof reaches into said piston chamber and abuts against said seal, said movement-restraining device being forcefully held on said body to hold said seal against axial movement while said slave cylinder is filled with hydraulic fluid.

-5-

Hydraulic control apparatus and a method of assembly thereof in accordance with the present invention will now be described by way of example with reference to the accompanying drawings, wherein like reference numerals refer to like parts and in which

FIG. 1 is a schematic illustration, partly in section, of a hydraulic clutch control apparatus having an example of structure of concentric slave cylinder according to the present invention;

FIG. 2 is an enlarged view, partly in section, similar to that of FIG. 1 but showing the cylinder body subassembly separate from the piston means subassembly;

FIG. 3 is a transverse sectional view of the structure of FIG. 2 taken on the line 3-3 thereof;

FIGS. 4 and 5 are respective longitudinal sectional views showing the slave cylinder fully assembled and in its two extreme positions;

FIG. 6 is a view similar to FIG. 2 but showing a modification of the movement-restraining device for the cylinder body subassembly; and

FIG. 7 is an end elevational view of the structure of FIG. 6 taken on the line 7-7 thereof.

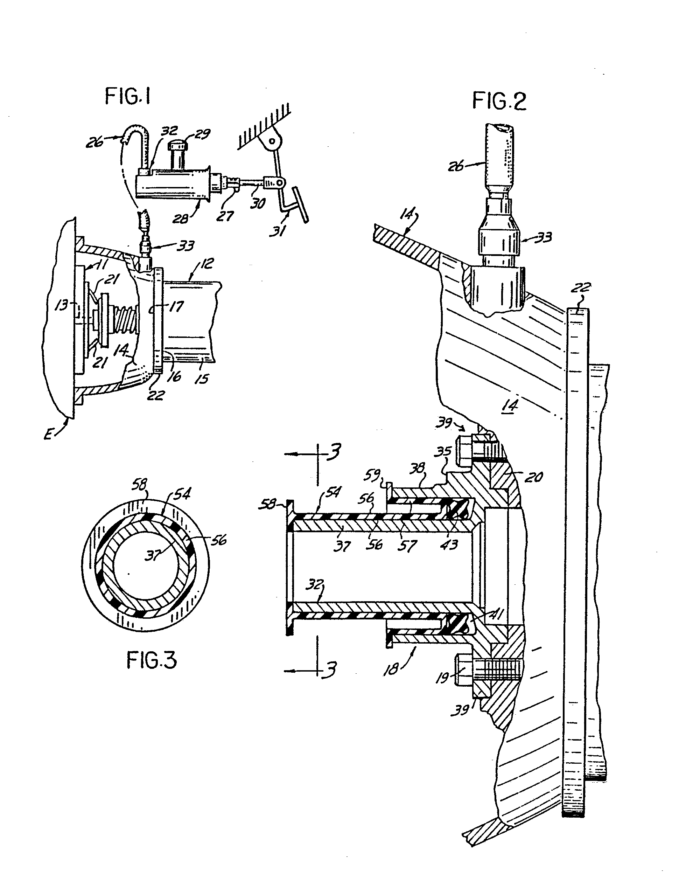

Referring to the drawing in greater detail and first to FIGS. 1-5, a motor vehicle transmission is schematically illustrated, FIG. 1, as comprising a friction clutch assembly 11 and a gearbox or transmission 12 enclosed in a casing or housing 15 having a flange 22 on the front end thereof, as shown. A transmission input shaft 13 drives the gearbox 12 from rotary power transmitted to it by the clutch assembly 11. A bell housing 14, surrounding the clutch assembly 11, is bolted on the rear face of the motor vehicle engine, designated "E".

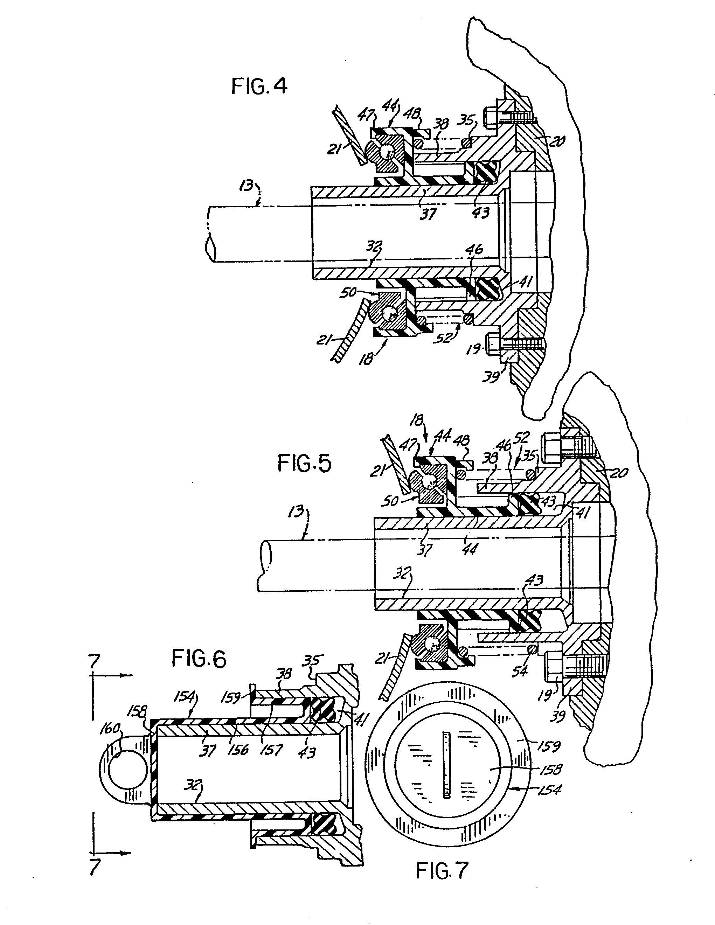

The rear face 16 of the bell housing 14 is bolted to the front face 17 of the gearbox casing flange 22.   A hydraulic concentric slave cylinder, generally designated 18, is disposed around the input shaft 13 within the bell housing 14 for forcefully reciprocating the vehicle clutch throw-out bearing which actuates the diaphragm spring fingers of the clutch assembly 11.   Projecting fingers of the diaphragm spring are shown and indicated at 21 in FIGS. 1, 4 and 5.   In the example of structure illustrated, the slave cylinder 18 is cast into a one-piece body, designated 32, which is provided with projecting inner and outer tubular portions 37 and 38, respectively, and a rear mounting flange 39.   A forward-facing radial shoulder 35 is formed on the slave cylinder body outwardly of the outer tubular portion 38 for purposes which will be mentioned, infra.   The slave cylinder body may be bolted, as shown at 19, via its rear flange 39, to the front end plate 20 of the vehicle transmission or, in the alternative, may be bolted to the rear face of the clutch bell housing 14 or may be cast integral with the transmission end plate 20 or with the rear face of the clutch bell housing 14, all as described in the aforementioned co-pending European application No 0146283.   In any case, when the motor vehicle is finally assembled, the input shaft 13 projects rearwardly from the clutch assembly 11 through both the slave cylinder 18 and the end plate 20 into the vehicle transmission, as shown in FIGS. 4 and 5.

The slave cylinder 18 is connected, via a hydraulic fluid conduit 26, to a master cylinder 28, FIG. 1.   The master cylinder 28 is provided with a built-in hydraulic fluid reservoir 29 and has an input rod 30 pivotally connected at its outer end to a clutch control pedal 31 installed within the driver compartment of a motor vehicle, not shown. The inner end of the rod 30, as is well known, is connected to a piston, not shown, reciprocably disposed inside of the master cylinder 28 for displacing hydraulic fluid through the line 26 to the slave cylinder 18 when the clutch pedal 31 is depressed. As shown and described in one or more of the aforementioned co-pending applications, a removable locking clip 27 holds the input rod 30 in its extended position until after installation of the master cylinder 28 on the motor vehicle. The line 26 is a flexible conduit or hose having a connector 33 on one end for connection to the inlet of the slave connector 18 and having another connector 32 on the other end for connection to the outlet of the master cylinder 28. The connector 33 is a leakproof quick-connect type connector which maintains the integrity of the pre-filled and pre-tested hydraulic clutch control apparatus even after "breaking" of such connector 33 to separate the slave cylinder 18 from the conduit 26 and master cylinder 28, as shown and described in copending European application No. 0146283.

In the example of structure of slave cylinder illustrated, the inner and outer tubular portions 37 and 38 form an annular piston chamber 41 therebetween which is filled with hydraulic fluid (in communication with that in the conduit 26 and master cylinder 28) and sealed at the front end thereof by an elastomeric star-shaped annular seal 43. The seal 43 is reciprocable within the piston chamber 41 and liquid-tight seals the hydraulic fluid behind it. The inner tubular portion 37 is elongated axially in respect to the outer tubular portion 38 and slidably supports thereon the aforementioned piston means for the slave cylinder 18. Such piston means, generally designated 44, is an annular structure having a hollow tubular portion 56 which, via its I.D., slidably engages the O.D. of the inner tubular portion 37. The rear end of the piston means 44 is constructed to operate in the piston chamber 41 and for this purpose, is provided with a radially projecting cylinder flange 46 which abuts against the seal 43 and, via its O.D., engages the I.D. of the outer tubular portion 38. The front end of the piston means 44 is constructed as a combination bearing-carrier and spring-holder and, for these purposes, is provided with a radially projecting wall formed integrally with the tubular portion 44. At its O.D., such radial wall is provided with forwardly and rearwardly projecting portions 47 and 48, respectively, each of which has a radially inwardly projecting retention lip, as shown. The wall portion 47 forms an annular forward-facing cavity for holding therein an annular throw-out bearing 50 for the vehicle clutch. The throw-out bearing 50 is snapped past the respective retention lip on the wall portion 47 and, on its inner race, has an annular rounded front nose portion which abuts against the aforementioned diaphragm spring fingers 21 of the clutch assembly 11. The wall portion 48 forms an annular rear-facing cavity for holding therein a compression spring, designated 52, which serves, as is well known, as a take-up spring for maintaining the throw-out bearing 50 in continual engagement with the spring fingers 21 as wear occurs on the friction plate of the clutch assembly 11 during use of the vehicle. The front end of the compression spring 52 is snapped past the respective retention lip on the wall portion 48 so that the spring 52 forms an operative part of the piston means subassembly.

In accordance with the present invention, the cylinder body subassembly includes a movement-restraining device, generally designated 54, which is installed on the cylinder body 32 in lieu of the piston means 44. Such movement-restraining device 54 or dummy piston, comprises an elongated double-walled hollow body having inner and outer tubular portions 56 and 57, respectively, integrally joined together by an annular radially extending rear wall, as shown. The inner wall 56 is elongated axially in respect to the outer wall 57 and slidably fits over the inner tubular portion 37, with which, via its inside diameter (I.D.), it forms a near interference fit with the outside diameter (O.D.) of such tubular portion 37. The forward ends of the inner and outer walls 56 and 57 are formed, as shown, with radially directed lips 58 and 59, respectively, which abut against the front faces of the inner and outer tubular portions 37 and 38, respectively. A portion of the lip 58 projects radially outwardly of the inner wall 56 to serve as a handle for removing the restraining sleeve 54 from the cylinder body 32 when desired. The outer wall 57, via its O.D., forms a near interference fit with the I.D. of the outer tubular portion 38 and to such extent that the outer wall 57 flexes radially inwardly toward the inner wall 56 when the device 54 is installed on the cylinder body 32. The device 54 is thus forcefully held on the slave cylinder body 32 and, in turn, holds the seal 43 against axial movement while the piston chamber is filled with hydraulic fluid. When it is desired to fully assemble the slave cylinder 18, the device 54 is pulled off the front end of the tubular portion 37, and in lieu thereof, the piston means subassembly 44 is installed thereon. The body of the piston means subassembly 44 is inserted over the inner tubular portion 37 and pushed axially rearwardly thereof so that the flange 46 on the piston body enters the piston chamber 41 and so that the rear end of the take-up spring 52 engages the aforementioned shoulder 35 on the slave cylinder body. As previously mentioned, the front nose portion of the throw-out bearing 50 engages the diaphragm spring fingers 21 of the clutch assembly 11 when the slave cylinder 18 is fully assembled and installed on a motor vehicle.

Referring now to FIGS. 6 and 7, a modification of the movement-restraining device for the slave cylinder subassembly 32 is shown and designated 154. The device 154 is constructed similarly to the device 54 so that similar parts thereof are designated 156, 157, etc. The device 154 is formed with a full wall on its front end which completely closes off the front end of the inner tubular portion 37. A forwardly projecting handle having a finger-grip aperture 160 formed therein is integrally formed, as shown, with such full front wall of the restraining sleeve 154.

It will be noted that the bolts 19 are arranged on a pitch circle of greater radius than the radial extremities of the movement restraining device 54. The radial extremeties in Fig. 2 of the movement restraining device comprise opposite peripheral portions of the lip 59. With the device 54 in the fig. 2 position it is possible to position a single nut or bolt tightening device (commonly called a nut runner) over the body 32 so that all the bolts 19 can be tightened simultaneously. That would not be possible where the piston occupied the piston chamber 41, as the radial wall formed integrally with the tubular portion 44 having wall portion 47 thereon would partially overlie in a radial sense and obscure the bolts 19 so that the latter could be tightened one at a time only. Therefore, the use of the movement restraining device leads to quicker assembly of the slave cylinder into the vehicle. The same advantages arise with movement restraining device 154 of Figs. 6 and 7.

0195521

-1-

<u>CLAIMS</u>

1. A method of assembling a hydraulic control apparatus for mounting on a structure to actuate a mechanism, said apparatus including an actuator (18) having a body (32) defining a piston chamber (41) and piston means (44) and seal means (43) slidably reciprocable within said piston chamber by hydraulic fluid under pressure, the method being characterised by inserting a movement restraining device (54,154) into the piston chamber (41) with the piston means (44) removed to inhibit axial movement of the seal (43) in one direction and, to render the actuator (18) operative, removing said movement restraining device and replacing it with said piston means.

2. A method according to Claim 1 characterised by filling the actuator (18) with hydrualic fluid with said movement restraining device (54;154) in position in the piston chamber (41).

3. A method of assembling a hydraulic control apparatus according to Claim 1 or 2 characterised by securing the body (32) to a member (20) by fastening means (19) which lie radially outboard of radial extremities of said movement device (54;154).

4. A method according to Claim 2 or 3 characterised by holding the movement restraining device (54,154) frictionally within the piston chamber (41).

5. A method according to Claim 4 characterised by forming the movement restraining device (54;154) so that a portion thereof (57;157) flexes radially as the movement restraining device is inserted into the piston chamber (41).

6. A method according to any preceding claim where said piston chamber (41) piston means (44) and seal (43) are annular and the method is characterised by providing an annular movement restraining device (54).

7. A method according to claim 6 characterised by forming said movement restraining device (54) as a double-walled hollow sleeve having

-2-

inner and outer walls (56,57 and 156,157) and a radial end wall
(43) for engaging said seal (43).

8. A method according to Claim 7 when appendant to Claim 6 characterised
by forming said inner and outer walls  (56,57 and 154,157) so that
one of them (57;157) flexes radially towards the other when the
movement restraining device (54) is inserted in the piston chamber
(41).

9. A method according to any preceding claim characterised by providing
handle means (58;160) on said movement restraining means (54;154)
to enable the movement restraining means to be removed from the
piston chamber (41).

10. Hydraulic control apparatus for mounting on a structure to actuate
a mechanism, said apparatus including an actuator (18) having a
body (32) defining a piston chamber (41), piston means (44) and
seal means (43) slidably axially within said chamber by hydrualic
fluid under pressure, characterised in that a movement restraining
device (54) is insertable in said piston chamber (41) in place of
the piston means (44) to inhibit axial movement of the seal (43)
in one direction, the movement restraining device (54) being subsequently
removable so that the piston means (44) can be inserted to render
the actuator operative.

11. Hydraulic control apparatus according to Claim 9 characterised
in that the movement restraining device (54) is inserted in the
piston chamber (41) prior to the actuator being filled with hydraulic
fluid.

12. Hydraulic apparatus according to Claim 10 or 11 characterised
in that the body (32) is secured to a member (20) by fastening means
(19) which lie radially outboard of radial extremities of said movement
restraining device (54,154).

13. Hydraulic apparatus according to Claims 10,11 or 12 characterised
in that the movement restraining device (54) is arranged to be held
frictionally within the piston chamber (41).

14. Hydraulic apparatus according to Claim 13 characterised in that the movement restraining device (54) is formed so that a portion thereof (57;157) flexes radially as the movement restraining device is inserted into the piston chamber (41).

15. Hydraulic apparatus according to any of Claims 10 to 14 characterised in that said piston chamber (41) piston means (44) seal (43) and movement restraining device (54) are annular.

16. Hydraulic apparatus according to Claim 15 characterised in that the movement restraining device (54) is a double-walled hollow sleeve having inner and outer walls (56,57 and 156,157) and a radial end wall (46) for engaging said seal (43).

17. Hydraulic apparatus according to Claim 16 when appendant to Claim 14 characterised in that the inner and outer walls are formed so that one of them (57,157) flexes radially towards the other (56,156) when the movement restraining device (54) is inserted in the piston chamber (41).

18. Hydraulic apparatus according to any Claims 10 to 17 characterised in that handle means (58;160) is provided on said movement restraining means (54,154) to enable the movement restraining means to be removed from the piston chamber (41).

19. Hydraulic apparatus according to any of Claims 10 to 18 in which the actuator (18) is a slave cylinder of a hydraulic control apparatus of a motor vehicle.

20. Hydraulic apparatus according to Claim 19 in which the apparatus operates a friction clutch (11) of the motor vehicle.

FIG.1

FIG.2

FIG.3

2/2

0195521

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | GB-A-2 142 999 (AUTOMOTIVE PRODUCTS) <br><br> * Whole document * <br> --- | 1-4,6, 10-13, 15,19, 20 | F 16 D 25/12 <br> B 65 D 59/00 |
| Y | US-A-4 423 753 (SMITH) <br><br> * Whole document * <br> --- | 1-4,6, 10-13, 15,19, 20 | |
| A | FR-A-2 048 419 (PORTER) <br> --- | | |
| D,A | US-A-4 454 632 (NIX) <br> --- | | **TECHNICAL FIELDS SEARCHED (Int. Cl.4)** |
| D,A | EP-A-0 146 283 (AUTOMOTIVE PRODUCTS) <br> --- | | F 16 D 25/00 <br> B 65 D <br> F 15 B |
| D,A | GB-A-1 539 879 (AUTOMOTIVE PRODUCTS) <br> ----- | | |

The present search report has been drawn up for all claims

| Place of search | Date of completion of the search | Examiner |
|---|---|---|
| THE HAGUE | 19-06-1986 | BALDWIN D.R. |